Europäisches Patentamt

European Patent Office

Office européen des brevets

(19)

(11) **EP 1 342 694 A1**

(12) **EUROPÄISCHE PATENTANMELDUNG**

(43) Veröffentlichungstag:
**10.09.2003 Patentblatt 2003/37**

(51) Int Cl.[7]: **C01B 3/38**, B01J 8/04

(21) Anmeldenummer: **03090050.0**

(22) Anmeldetag: **04.03.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **04.03.2002 DE 10209886**

(71) Anmelder:
• **FRAUNHOFER-GESELLSCHAFT ZUR FÖRDERUNG DER ANGEWANDTEN FORSCHUNG E.V.**
**80636 München (DE)**
• **Mahler AGS GmbH**
**70329 Stuttgart (DE)**

(72) Erfinder:
• **Schlegel, Dieter**
**79114 Freiburg (DE)**

• **Szolak, Robert**
**79106 Freiburg (DE)**
• **Hofmann, Ulrich**
**73240 Wendlingen (DE)**
• **Straub, Marc**
**70563 Stuttgart (DE)**
• **Wiesner, William**
**72622 Nürtingen (DE)**
• **Tischhauser, Bernd**
**71144 Steinenbronn (DE)**
• **Löhr, Markus**
**70734 Fellbach (DE)**

(74) Vertreter: **Pfenning, Meinig & Partner**
**Joachimstaler Strasse 10-12**
**10719 Berlin (DE)**

(54) **Vorrichtung sowie Verfahren zur Reformierung von Kohlenwasserstoffen aus einem Einsatzgas**

(57) Die vorliegende Erfindung betrifft eine Vorrichtung (1) bzw. ein Verfahren zur Reformierung von Kohlenwasserstoffen aus einem Einsatzgas (2) mit einem Reformierreaktor (3) sowie einem Rauchgas ausstoßenden Brenner (4) zum Beheizen des Reformierreaktors, wobei der Reformierreaktor zwei Reformierungsabschnitte (3a, 3b) aufweist, bei dem der eine Reformierungsabschnitt (3a) entlang einer Längsachse (5) um den anderen herum angeordnet ist. Innerhalb des katalytisch aktiven Bereichs mindestens eines Reformierungsabschnittes (3a) verlaufen Rohre (6a, 6b) zur Durchleitung heißer Gase (7,8) zur Homogenisierung des Temperaturfeldes im Reformierungsabschnitt 3a.

Fig. 1

EP 1 342 694 A1

**Beschreibung**

Die vorliegende Erfindung betrifft eine Vorrichtung sowie ein Verfahren zur Reformierung von Kohlenwasserstoffen aus einem Einsatzgas nach den Patentansprüchen 1 bzw. 17.

Zur Wasserstofferzeugung aus fossilen Energieträgern, wie Erdgas, Flüssiggas, Biogas, Deponiegas oder Naphtha nach dem Dampfreformierungsverfahren ("Steam-Reforming-Verfahren") sind mehrere Anlagensysteme bekannt. Die daraus erhaltenen wasserstoffreichen Synthesegase dienen beispielsweise nachfolgend zur Herstellung von Ammoniak, Alkohol oder zur Methanol-Synthese, wobei ein wesentlicher Anwendungsfall die Erzeugung von Wasserstoff ist, der für klassische Anwendungen als industrieller Rohstoff z.B. für die Metallurgie, die Glasindustrie oder die Lebensmittelindustrie verwendet werden kann. In zunehmendem Maße wird jedoch hochreiner Wasserstoff als Energieträger, z.B. für die zahlreichen Anwendungen von Brennstoffzellensystemen wie z.B. bei der Hausenergieversorgung, der Energiespeicherung oder den Antrieb von Fahrzeugflotten, insbesondere für Busse oder den Lieferverkehr benötigt.

So sind zur Herstellung von molekularem Wasserstoff im großtechnischen Maßstab verschiedene Großanlagen bekannt. Bei solchen Anlagen (> 500 Nm$^3$/Stunde) werden mit Katalysatormaterial gefüllte Reformerrohre mit einer Länge von 10m oder mehr eingesetzt. Die für die Reaktion in den Reformerrohren benötigte Wärme wird dabei hauptsächlich durch Strahlung oder von der Brennerflamme auf die Reformerrohre übertragen.

Insbesondere für dezentrale bzw. mobile Anwendungen von Brennstoffzellensystemen werden jedoch kompakte Vorrichtungen zur Reformierung notwendig. Bei kleinen Wasserstofferzeugungsanlagen mit einem Produktstrom <400 Nm$^3$/Stunde kommt es verstärkt auf eine kompakte Bauweise mit geringer Bauhöhe an, wobei trotzdem die Effizienz der Großanlage annähernd erreicht werden soll. Bei Reduzierung der Anlagenleistung ergeben sich jedoch Limits bei der klassischen Reformerbauweise aus großindustriellen Anwendungen mit den sehr langen Reformerrohren und mindestens zwei Brennern bzw. einem Zentralbrenner mit darum liegenden Reformerrohren. Es ergibt sich das Problem, daß derzeit für kleinere Anlagen die kostengünstige Herstellung von Wasserstoff kaum möglich ist.

Die WO 98/528 68 A1 zeigt einen gattungsgemäßen Gegenstand. Dort ist eine Vorrichtung zur Reformierung von Kohlenwasserstoffen aus einem Einsatzgas mit einem Reformierreaktor sowie einem Rauchgas ausstoßenden Brenner zum Beheizen des Refomierreaktors gezeigt. Diese bekannte Vorrichtung enthält einen Strahlungsbrenner, welcher um zwei radial geschichtete Reformierungsabschnitte herum angeordnet ist. Dem inneren Reformierungsabschnitt wird ein Einsatzgas, welches z.B. Dampf und Erdgas enthält, zugeführt. Auf diesem ersten inneren Reformierungsabschnitt wird durch den Strahlungsbrenner bzw. aus diesem Strahlungsbrenner stammenden Rauchgas konvektiv Wärme zugeführt. Dies führt dazu, daß in dem ersten Reformierungsabschnitt durch auf Metallwaben aufgebrachtes Katalysatormaterial eine teilweise Reformierung des Einsatzgases stattfindet. Anschließend wird das teilweise reformierte Einsatzgas dem den ersten Reformierungsabschnitt ringförmig umschließenden Reformierungsabschnitt zugeführt, welcher ebenfalls über mit Katalysatormaterial belegte Metallwaben verfügt. Auf diesen zweiten, äußeren Reformierungsabschnitt wird durch den Brenner konvektiv sowie durch Strahlung Wärme zugeführt. Nach Durchlauf des zweiten Reformierungsabschnittes sind die dort enthaltenen Kohlenwasserstoffe fast vollständig umgesetzt.

Die dort gezeigte Vorrichtung zur Reformierung ist prinzipiell funktionsfähig, allerdings hat der dort vorgeschlagene Strahlungsbrenner (welcher keramische Lochplatten aufweist) in der Praxis für größere Brennleistungen die Nachteile einer komplizierten Regelbarkeit, Empfindlichkeit der Keramikplatten sowie hohe Gesamtkosten. Im übrigen sind die dort enthaltenen Metallwaben ebenfalls recht kostenintensiv und müssen in ihrer Struktur stets auf die spezielle Anlage hin konstruiert werden.

Der vorliegenden Erfindung liegt die Aufgabe zugrunde eine Vorrichtung sowie ein Verfahren zur Reformierung zur Verfügung zu stellen, welches insbesondere auch für die Erzeugung kleinerer und mittlerer Wasserstoffmengen geeignet ist, sowie kostengünstig herstellbar ist und trotzdem einen guten Wirkungsgrad bzw. ein schnelles Anund Abfahren ermöglicht.

Diese Aufgabe durch eine Vorrichtung nach Anspruch 1 bzw. ein Verfahren nach Anspruch 17 gelöst.

Dadurch, daß bei einer erfindungsgemäßen Vorrichtung innerhalb des katalytisch aktiven Bereichs mindestens eines Reformierungsabschnittes in Richtung der Längsachse dieses Reformierungsabschnittes verlaufende Rohre zur Durchleitung heißer Gase gegeben sind, wird erreicht, daß in den Reformierungsabschnitten geringere Temperaturgradienten auftreten und somit die Temperatur im Reformierungsabschnitt vergleichmäßigt wird. Hiermit ist es möglich, eine relativ homogene Umsetzung der Kohlenwasserstoffe im Einsatzgas bei geringem Schlupfanteil zu erreichen. Durch diese relativ homogene Temperaturverteilung in den Reformierungsabschnitten kann die Prozeßtemperatur insgesamt niedrig gehalten werden. Dies hat die Vorteil, daß kostengünstigere Werkstoffe, wie z. B. Edelstahl (anstatt Keramik) zur -Anwendung kommen können und trotzdem der Umsetzungsgrad bei den Kohlenwasserstoffen praktisch dem von Großanlagen entspricht. Ein weiterer Vorteil der erfindungsgemäßen Anlage liegt darin, daß das eingeführte Einsatzgas unter lediglich geringem Druck den Reformierreaktor durchläuft, auch dies ermöglicht eine kostengünstigere Konstruktion des Reformierreaktors mit entsprechend dünneren Wandstärken bzw.

# EP 1 342 694 A1

kostengünstigen Materialien und Fügetechniken.

Dadurch, daß das Einsatzgas zunächst den ersten und nachfolgend den zweiten, konzentrisch darum angeordneten Reformierungsabschnitt durchläuft, ist außerdem eine kompakte Bauweise des Reformierreaktors sowie eine gute Wärmeausnutzung sichergestellt.

Vorteilhafte Weiterbildungen der erfindungsgemäßen Vorrichtung sowie des erfindungsgemäßen Verfahrens werden in den abhängigen Patentansprüchen angegeben.

Eine vorteilhafte Weiterbildung sieht vor, daß als heißes Gas durch die einen Reformierungsabschnitt durchlaufenden Rohre von dem Brenner ausgehendes Rauchgas und/oder bereits reformiertes bzw. teilreformiertes Einsatzgas verwendet wird. Hierdurch kommt es zu einer besonders guten Ausnutzung der durch den Brenner eingebrachten Wärmeenergie auf kleinstem Raum, so daß die Effizienz der kompakten Anlage hoch ist. Als Einsatzgas kommt hierbei vorzugsweise aufgrund der guten Verfügbarkeit Erdgas oder auch Biogas und Deponiegas vermischt mit Dampf zum Einsatz.

Eine besonders vorteilhafte Weiterbildung der Vorrichtung sieht vor, daß der äußere Reformierungsabschnitt zur Durchleitung des Einsatzgases dem inneren Reformierungsabschnitt vorgeschaltet ist und die in Richtung der Längsachse verlaufenden Rohre durch den äußeren Reformierungsabschnitt verlaufen. Insbesondere bei einem im Inneren des inneren Reformierungsabschnittes angebrachten Brenner wird hiermit eine in sämtlichen Reformierungsabschnitten relativ homogene Prozeßtemperatur ermöglicht. Während der innere Reformierungsabschnitt konvektiv und durch Strahlung des Brenners geheizt wird, wird der äußere Reformierungsabschnitt zusätzlich durch die darin angeordneten Rohre homogen beheizt.

Hierbei ist es besonders empfehlenswert, daß sowohl der äußere als auch der innere Reformierungsabschnitt jeweils einen kreisringsförmigen Querschnitt bzw. eine kreisringzylindrische Gestalt haben. Hierbei bietet es sich an, daß die Rohre über den Umfang des äußeren Reformierungsabschnittes verteilt sind, um so eine besonders homogene Wärmeausbreitung im äußeren Reformierungsabschnitt zu erreichen.

Des weiteren ist es besonders vorteilhaft, wenn diese Rohre über den Umfang des Reformierungsabschnittes verteilt alternierend unterschiedliche heiße Gase führen, so kann z.B. in einer periodischen Abfolge ein Rohr Rauchgas und ein benachbartes Rohr teil- bzw. vollreformiertes Einsatzgas führen.

Besonders vorteilhaft ist, wenn die Reformierungsabschnitte jeweils einen im wesentlichen kreisringspaltförmigen Querschnitt aufweisen, wobei im Innersten der Brenner angeordnet ist, welcher vorzugsweise in Längsrichtung ein zylindrisches Strahlungsrohr zur Wärmehomogenisierung bzw. Rauchgasleitung aufweist und zwischen den geschichteten Reformierungsabschnitten selbst ein weitere Ringspalt zur Führung von teilweise reformierten Einsatzgas vorgesehen ist. Hierdurch ist bei kompakten Abmaßen eine homogene Wärmeverteilung gegeben, welche durch einen Wärme-tauschbereich, "welcher dem ersten Reformierungsabschnitt vorgeordnet ist, noch verbessert werden kann. Hierbei kann das Einsatzgas zur Anfangserwärmung z.B. im Gegenstrom mit Rauchgas bzw. reformiertem und somit erwärmten Einsatzgas geführt werden. Eine besonders vorteilhafte Ausführungsform sieht vor, daß die Reformierungsabschnitte mit einem kreisringspaltförmigen Querschnitt in radialer Richtung Spaltgrößen kleiner als 50 mm, vorzugsweise kleiner als 25 mm aufweisen. Durch diese geringen Spaltbreiten ist es möglich, noch kleinere Temperaturgradienten in radialer Richtung über den Kreisring hinweg zu gewährleisten.

Die Reformierungsabschnitte selbst können auf verschiedene Weisen gefüllt sein. Zum einen ist es möglich, eine gasleitende Metallwabenstruktur, welche mit z.B. NiO-Katalysatormaterial beschichtet ist, vorzusehen, um eine gute Umsetzung des Einsatzgases zu gewährleisten.

Eine besonders kostengünstige Weiterbildung sieht vor, daß innerhalb der Reformierungsabschnitte mit Katalysatormaterial belegte kugelförmige Trägermaterialien aus Kalziumaluminat oder Aluminiumoxid vorgesehen sind. Diese sind z.B. mit NiO-Reformierkatalysator im Wash-Coat-Verfahren beschichtet. Hierbei ist vorteilhaft, daß einerseits der Wirkungsgrad dieser Füllung des Reformierungsreaktors kaum hinter den von guten Metallwabenstrukturen zurücksteht, die Materialkosten jedoch deutlich geringer ausfallen und vor allem ein Befüllen der Reformierungsabschnitte besonders einfach zu gewährleisten ist, dies gilt auch für den kompletten Austausch verbrauchten Materials. Im Sinne niedriger Temperaturgradienten und schnellen Ansprechverhaltens ist es hierbei besonders vorteilhaft, wenn die kugelförmigen Trägermaterialien einen Durchmesser zwischen 3 und 6 mm, vorzugsweise zwischen 4 und 5 mm aufweisen.

Eine vorteilhafte Ausführungsform des erfindungsgemäßen Verfahrens sieht vor, daß die Umsetzung der dem Einsatzgas enthaltenen Kohlenwasserstoffe in jedem Reformierungsabschnitt jeweils 30-50% beträgt. Hierbei kann je nach konstruktiver Auslegung des Reformierreaktors die Verteilung der anteiligen Umsetzung in den einzelnen Reformierungsabschnitten gesteuert werden. Insgesamt ist es sogar möglich, mit dem erfindungsgemäßen Verfahren bzw. der erfindungsgemäßen Vorrichtung eine Gesamtumsetzung der in dem Einsatzgas enthaltenen Kohlenwasserstoffe von über 97% bei relativ geringen Herstellungskosten zu gewährleisten. Der Gesamtumsatz $X_c$ wird hierbei definiert als die Differenz zwischen der im Einsatzgas enthaltenen Molmenge an Kohlenstoffatomen C in Kohlenwasserstoffen $C_NH_M$ wnd der im Reformat enthaltenen Molmenge an (Methan) $CH_4$ bezogen auf die im Einsatzgas enthaltene Molmenge an C-Atomen in Kohlenwasserstoffen:

3

$$x_C = \frac{\dot{n}_{\sum C \text{ in } \sum C_N H_M}|_{\text{Einsatzgas}} - \dot{n}_{CH_4}|_{\text{Reformat}}}{\dot{n}_{\sum C \text{ in } \sum C_N H_M}|_{\text{Einsatzgas}}}$$

Eine weitere vorteilhafte Weiterbildung des Verfahrens sieht vor, daß der Druck in den Reformierungsabschnitten zwischen 0 und 1,75 bar beträgt. Die Austrittstemperatur des reformierten Einsatzgases nach dem Austritt aus dem zweiten Reformierungsabschnitt beträgt zwischen 680 und 740 Grad Celsius, vorzugsweise zwischen 700 und 730 Grad Celsius. Hierdurch können die Materialbelastungen deutlich reduziert werden. Durch die Reduzierung der Reaktionstemperatur kann, bei gleicher Strahlungsleistung des Brenners, auch die Temperatur des den Brenner umgebenden Strahlrohres im Vergleich mit herkömmlichen Konstruktionen reduziert werden. Dadurch kann handelsüblicher Edelstahl eingesetzt werden, der im Vergleich mit bei höheren Temperaturen erforderlicher Keramik in Anschaffung und Verarbeitung kostengünstiger ist.

Es ist außerdem bekannt, daß bei der Dampfreformierung ein niedriger Druck zu einer besseren Umsetzung des Einsatzgases führt. Insofern helfen hier auch die erfindungsgemäßen Schüttungen von mit Katalysatormaterial beschichteten Kugeln, die zu einem geringeren Druckverlust des durchströmenden Einsatzgases und damit zu einem niedrigen Reformierungsdruck führt. Da die Drücke des im Inneren des Reformers nur wenig oberhalb vom Umgebungsdruck liegen, sind die Materialbelastungen und damit die erforderlichen Wanddicken geringer, womit die Kosten sinken. Außerdem wird durch die geringen Wandstärken die Wärmeübertragung weiter begünstigt.

Weitere vorteilhafte Weiterbildungen der vorliegenden Erfindung werden in den übrigen abhängigen Ansprüchen angegeben.

Die vorliegende Erfindung wird nun anhand von Figuren erläutert. Es zeigen:

Figur 1    einen Längsschnitt durch eine erfindungsge- mäße Vorrichtung sowie
Figur 2    einen Querschnitt durch diese Vorrichtung nach A-A entsprechend Figur 1.

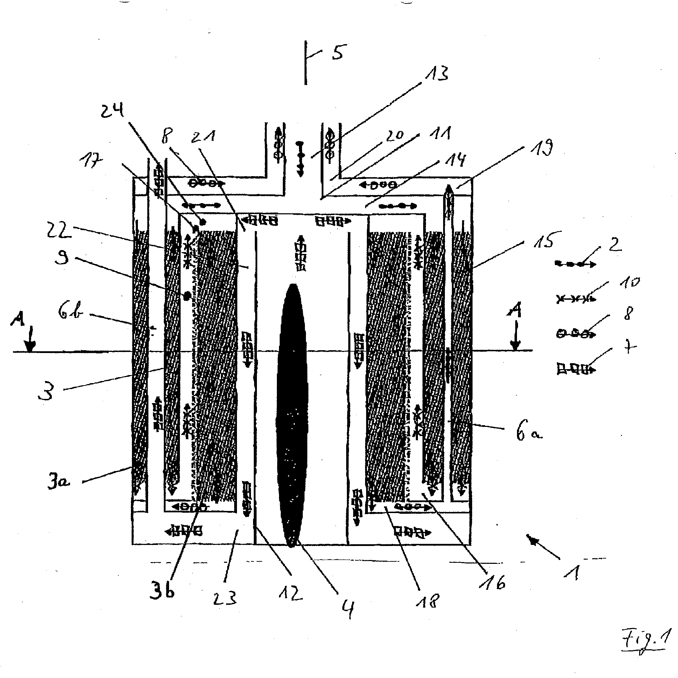

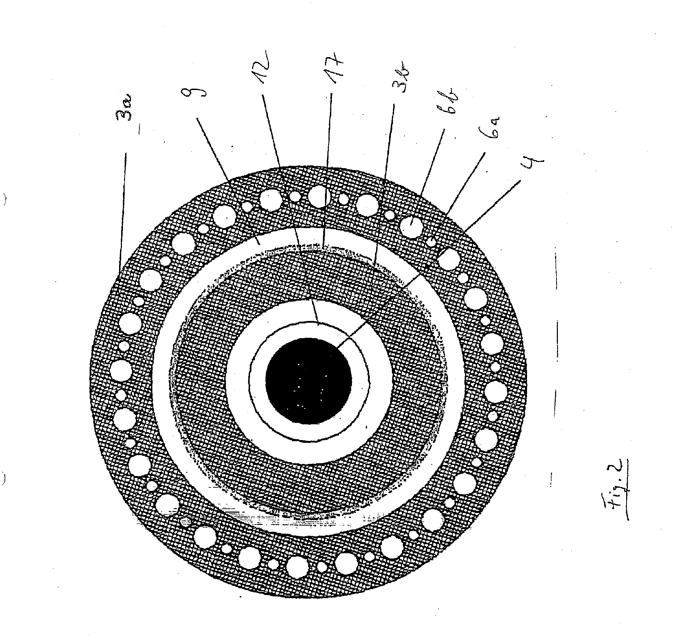

Die Figuren 1 und 2 zeigen zwei orthogonale Schnitte durch eine erfindungsgemäße Vorrichtung. Hierbei handelt es sich um eine Vorrichtung 1 zur Reformierung von Kohlenwasserstoffen aus einem Einsatzgas 2 mit einem Reformierreaktor 3 sowie einem Rauchgas ausstoßenden Brenner 4 zum Beheizen des Reformierreaktors, wobei der Reformierreaktor zwei Reformierungsabschnitte 3a und 3b aufweist, bei dem der eine Reformierungsabschnitt 3a entlang einer Längsachse 5 um den anderen Reformierungsabschnitt 3b herum angeordnet ist. Entscheidend ist hierbei, daß innerhalb des katalytisch aktiven Bereichs des Reformierungsabschnittes 3a, durch welchen Einsatzgas strömt, in Richtung der Längsachse 5 verlaufende Rohre 6a, 6b zur Durchleitung heißer Gase angeordnet sind.

Die Vorrichtung 1 ist im wesentlichen rotationssymetrisch bezüglich der Längsachse 5 angeordnet. Durch einen oberen Einlaß 13 strömt ein Einsatzgas in die Vorrichtung hinein. Dieses Einsatzgas 2 enthält eine Mischung aus z.B. Erdgas, Biogas oder Deponiegas und Dampf. Nach Passieren des oberen Einlasses 13 strömt das Gas umfänglich radial nach außen durch einen Radialkanal 14. Bei Strömen durch den oberen Einlaß 13 und den Radialkanal 14 wird das Einsatzgas 2 durch Produktgas/Reformat 8 (d.h. praktisch vollständig reformiertes Einsatzgas) im Gegenstrom erwärmt. Hiernach strömt das erwärmte Einsatzgas 2 in einen ringspaltförmigen ersten Reformierungsabschnitt 3a. In diesem Reformierungsabschnitt liegen die Dicken der Katalysatorschicht zwischen zwei beheizten Wänden unter 25 mm. Der ringspaltförmige Reformierungsabschnitt 3a erstreckt sich entlang der Längsachse 5 als Mittelachse und weist im Inneren Ringspaltes, etwa im mittleren radialen Bereich, über seinen Umfang verteilt eine Mehrzahl von Rohren 6a und 6b auf. Der Ringspalt des Reformierungsabschnittes 3a ist mit einer Schüttung 15 gefüllt. Diese Schüttung besteht aus Kugeln mit 4-5mm Durchmesser. Die Kugeln bestehen aus einem kugelförmigen Trägermaterial aus Kalziumaluminat. Dieses Trägermaterial ist mit NiO-Reformierkatalysator im Wash-Coat-Verfahren beschichtet. Die Rohre 6a bzw. 6b verlaufen in radialer Richtung etwa inmitten dieser Schichtung, so daß die Schichtung im wesentlichen vollständig die Rohre 6a und 6b umschließt.

Wie in Figur 2 zu sehen, sind die Rohre 6a und 6b alternierend über den Umfang verteilt in der Schüttung des Reformierungsabschnittes 3a untergebracht. Hierbei sind die Rohre mit kleinem Durchmesser mit 6a, die Rohre mit großem Durchmesser mit 6b bezeichnet. Die Rohre 6a führen im wesentlichen vollständig reformiertes Einsatzgas (Reformat) 8 im Gegenstrom bezüglich des Stromes des Einsatzgases 2 in der Schüttung, die Rohre 6b führen von dem Brenner 4 entstammendes Rauchgas im wesentlichen in Gegenströmung zu dem Einsatzgas 2 innerhalb der Schüttung. Die Rohre 6a und &b wechseln sich jeweils ab, durch diese Rohre wird bei der Leitung der darin geführten heißen Gase quasi eine "Temperaturbrücke" von dem äußeren zum inneren Umfang des Ringspaltes gebildet, so daß sich innerhalb der Schüttung des Ringspaltes eine homogene Temperaturverteilung mit einem niedrigen Temperaturgradienten ergibt.

Nachdem das Einsatzgas 2 die Schüttung (in Figur 1 vertikal nach unten gerichtet) durchlaufen hat, wird diese durch eine Radialumlenkung 16 geführt und anschließend in einem Ringspalt 9 in Längsrichtung 5 senkrecht nach oben geführt. Beim Passieren der Radialumlenkung 16 sind die in dem Einsatzgas enthaltenen Kohlenwasserstoffe zu 30 bis 50% zu Wasserstoff umgesetzt.

Der Ringspalt 9 weist an seinem äußeren Umfang eine Edelstahlwand auf, welche auf ihrer radial außen liegenden Seite die Schüttung des Reformierungsabschnittes 3a enthält. Auf der radialen Innenwand des Ringspaltes 9 ist eine thermisch isolierende Schicht 17 angebracht. Radial innerhalb bezüglich dieser Isolierwand 17 ist ein zweiter, innerer Reformierungsabschnitt 3b angeordnet. Dieser ist ringspaltförmig um die Längsachse 5 herum ausgebildet und konzentrisch zum Reformierungsabschnitt 3a angeordnet. Der Reformierungsabschnitt 3b ist mit derselben Schüttung gefüllt wie der Reformierungsabschnitt 3a und weist im wesentlichen die selbe Höhe auf. Nachdem das teilweise reformierte Einsatzgas 10 den Ringspalt 9 nach oben hin durchlaufen hat, passiert es eine weitere radial Umlenkung 24 und wird dort radial nach innen geführt und dann wieder senkrecht nach unten in Richtung 5 durch die Schüttung des Reformierungsabschnittes 3b geführt. Beim Passieren dieser Schüttung werden wiederum 30-50 % der (bezogen auf die im durch den oberen Einlaß 13 eingeleiteten Einsatzgas 2 befindlichen) C-Atome der Kohlenwasserstoffe umgesetzt. Nach Durchlaufen der Schüttung gelangt das nunmehr reformierte Einsatzgas 8 durch eine weitere Radialumlenkung 18 radial nach außen und wird von dort durch die Rohre 6a in Richtung 5, wie in Figur 1 gezeigt nach oben geführt, wo es nach zwei weiteren Radialumlenkungen 19 und 20 senkrecht nach oben weg geführt wird und dabei im Gegenstrom zunächst das Einsatzgas 2 im Reformierungsabschnitt 3b und anschließend das durch den Radialkanal 14 bzw. den oberen Einlaß 13 strömende Einsatzgas erwärmt.

Sämtliche der oben beschriebenen Kanäle können aus relativ kostengünstigen Edelstahlmaterialien hergestellt werden. Die Dicke der dort verbauten Bleche beträgt vorzugsweise zwischen 2 und 7 mm. Dies wird dadurch möglich, daß die Temperaturen im Reformierreaktor relativ niedrig sind, so hat das reformierte Einsatzgas 8 beim Austritt des zweiten Reformierungsabschnittes 3b eine Temperatur zwischen 680 und 740 Grad Celsius, vorzugsweise zwischen 700 und 730 Grad Celsius. Der Strömungswiderstand der Reformierungsabschnitte, welche mit einer Schüttung gefüllt sind, ist relativ niedrig, so daß zum Durchleiten des Einsatzgases ein Druck zwischen 0 und 1,75 bar im Reformierreaktor ausreichend ist. Dies hat den weiteren Vorteil, daß hierbei die Dampfreformierung mit besonders hohen Umsetzungsgraden $X_c$ funktioniert. Die Erwärmung der Gesamtanordnung erfolgt über einen im Zentrum der Vorrichtung angeordneten Brenner 4. Der Brenner ist radial von einem Strahlungsrohr 12 umgeben, welches auf der Unterseite der Vorrichtung 1 aufliegt. Im Brenner 4 wird ein brennbares Gas unter Freisetzung von thermischer Energie zu Rauchgas verbrannt. Das Rauchgas wird zunächst in Richtung 5 senkrecht nach oben geführt und dort durch eine Radialumlenkung 21 auf die dem Brenner 4 abgewandte Seite des Strahlungsrohres 12 geleitet. Dort wird das Rauchgas 7 in einem Ringspalt 22 senkrecht nach unten geführt und dort durch eine Radialumlenkung 23 orthogonal seitlich nach radial außen geführt. Der innere Reformierungsabschnitt 3b wird durch die Strahlung des Strahlungsrohres 12 sowie konvektive Wärmeübertragung des Rauchgases 7 von innen her erwärmt. Nach Passieren der Radialumlenkung 23 wird das Rauchgas 7 dann durch Rohre 6b senkrecht nach oben geführt, wobei es im Gegenstrom das durch die Schüttung des Reformierungsabschnittes 3a geführte Einsatzgas 2 erwärmt und somit zur katalytischen Umsetzung der in dem Einsatzgas 2 enthaltenen Kohlenwasserstoffe beiträgt.

Erfindungsgemäß bieten sich als Brenner vorzugsweise Rauchgas ausstoßende Brenner an, da deren heiße Abgase hier besonders sinnvoll thermisch genutzt werden können. Es ist aber auch möglich, andere Brennertypen einzusetzen und heiße Gase extern zuzuleiten.

**Patentansprüche**

1. Vorrichtung (1) zur Reformierung von Kohlenwasserstoffen aus einem Einsatzgas (2) mit einem Reformierreaktor (3) sowie einem vorzugsweise Rauchgas ausstoßendem Brenner (4) zum Beheizen des Reformierreaktors, wobei der Reformierreaktor zwei Reformierungsabschnitte (3a,3b) aufweist, bei dem der eine Refomierungsabschnitt (3a) entlang einer Längsachse (5) um den anderen (3b) herum angeordnet ist, **dadurch gekennzeichnet, daß** innerhalb des katalytisch aktiven Bereichs mindestens eines Reformierungsabschnitts (3a) in Richtung der Längsachse (5) verlaufende Rohre (6a, 6b) zur Durchleitung heißer Gase (7,8) aufweist.

2. Vorrichtung nach Anspruch 1, **dadurch gekennzeichnet, daß** das heiße Gas Rauchgas (7) und/oder bereits reformiertes Einsatzgas (8) ist.

3. Vorrichtung nach einem der vorhergehenden Ansprüche, **dadurch gekennzeichnet, daß** das Einsatzgas (2) Erdgas und Dampf enthält.

4. Vorrichtung nach einem der vorhergehenden Ansprüche, **dadurch gekennzeichnet, daß** der äußere Reformierungsabschnitt (3a) zur Durchleitung des Einsatzgases (2) dem inneren Reformierungsabschnitt (3b) vorgeschaltet ist und die in Richtung der Längsachse (5) verlaufenden Rohre (6a, 6b) durch den äußeren Reformierungsabschnitt (3a) verlaufen.

5. Vorrichtung nach einem der vorhergehenden Ansprüche **dadurch gekennzeichnet, daß** auf der radialen Innenwand des Ringspaltes (9) eine thermisch isolierende Schicht (17) angebracht ist.

6. Vorrichtung nach einem der vorhergehenden Ansprüche, **dadurch gekennzeichnet, daß** die Rohre (6a, 6b) über den Umfang des äußeren Reformierungsabschnitts (3a) verteilt sind.

7. Vorrichtung nach Anspruch 6, **dadurch gekennzeichnet, daß** die Rohre (6a, 6b) über den Umfang verteilt alternierend unterschiedliche heiße Gase (7, 8) führen.

8. Vorrichtung nach einem der vorhergehenden Ansprüche, **dadurch gekennzeichnet, daß** zwischen den Reformierungsabschnitten (3a, 3b) ein Ringspalt (9) zur Führung von teilweise reformiertem einsatzgas (10) gebildet ist.

9. Vorrichtung nach einem der vorhergehenden Ansprüche, **dadurch gekennzeichnet, daß** dem inneren Reformierungsabschnitt (3b) ein Wärmetauschbereich (11) zur Anfangserwärmung des Einsatzgases (2) vorgeschaltet ist.

10. Vorrichtung nach einem der vorhergehenden Ansprüche, **dadurch gekennzeichnet, daß** der Brenner (4) im Inneren des inneren Reformierungsabschnittes (3b) angeordnet ist.

11. Vorrichtung nach Anspruch 10, **dadurch gekennzeichnet, daß** um den Brenner (4) herum in Längsrichtung ein Strahlungsrohr (12) angeordnet ist.

12. Vorrichtung nach einem der vorhergehenden Ansprüche, **dadurch gekennzeichnet, daß** die Reformierungsabschnitte (3a, 3b) einen im wesentlichen kreisringspaltförmigen Querschnitt aufweisen.

13. Vorrichtung nach Anspruch 12, **dadurch gekennzeichnet, daß** in den Reformierungsabschnitten (3a, 3b) die Dicken der Katalysatorschicht zwischen zwei beheizten Wänden kleiner als 50 mm, vorzugsweise kleiner als 25 mm betragen.

14. Vorrichtung nach einem der vorhergehenden Ansprüche, **dadurch gekennzeichnet, daß** die Reformierungsabschnitte (3a, 3b) mit Katalysatormaterial belegte Metallwabenstrukturen zur Durchleitung des Einsatzgases (2) aufweisen.

15. Vorrichtung nach einem der vorhergehenden Ansprüche, **dadurch gekennzeichnet, daß** innerhalb der Reformierungsabschnitte (3a, 3b) mit Katalysatormaterial belegte kugelförmige Trägermaterialien aus Kalziumaluminat oder Aluminiumoxid vorgesehen sind.

16. Vorrichtung nach Anspruch 15, **dadurch gekennzeichnet, daß** der Durchmesser der kugelförmigen Trägermaterialien zwischen 3 und 6 mm beträgt.

17. Verfahren zum Reformieren von Kohlenwasserstoffen in einem Reformierreaktor nach einem der Ansprüche 1 bis 16, **dadurch gekennzeichnet, daß** das Einsatzgas zunächst den ersten und nachfolgend den zweiten Reformierungsabschnitt durchläuft, wobei in mindestens einem Reformierungsabschnitt heißes Gas durch die in Längsrichtung verlaufenden Rohre strömt.

18. Verfahren nach Anspruch 17, **dadurch gekennzeichnet, daß** die Umsetzung der in dem Einsatzgas. enthaltenen Kohlenwasserstoffe in jedem Reformierungsabschnitt jeweils 30 bis 50 % beträgt.

19. Verfahren nach einem der Ansprüche 17 oder 18, **dadurch gekennzeichnet, daß** die Gesamtumsetzung der in dem Einsatzgas (2) enthaltenen Kohlenwasserstoffe in dem Reformierreaktor (3) über 97 % beträgt.

20. Verfahren nach einem der Ansprüche 17 bis 19, **dadurch gekennzeichnet, daß** der Druck in den Reformierungsabschnitten (3a, 3b) zwischen 0 und 1,75 bar beträgt.

**21.** Verfahren nach einem der Ansprüche 17 bis 20, **dadurch gekennzeichnet, daß** die Temperatur des reformierten Einsatzgases nach dem Austritt aus dem zweiten Reformierungsabschnitt zwischen 680 und 740 Grad Celsius, vorzugsweise zwischen 700 und 730 Grad Celsius beträgt.

Fig.1

Fig. 2

# EP 1 342 694 A1

<table>
<tr><td rowspan="2">Europäisches<br>Patentamt</td><td>EUROPÄISCHER TEILRECHERCHENBERICHT</td><td>Nummer der Anmeldung</td></tr>
<tr><td>der nach Regel 45 des Europäischen Patent-<br>übereinkommens für das weitere Verfahren als<br>europäischer Recherchenbericht gilt</td><td>EP 03 09 0050</td></tr>
</table>

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.7) |
|---|---|---|---|
| Y | EP 0 360 505 A (KOBE STEEL LTD) 28. März 1990 (1990-03-28) <br> * Spalte 1, Zeile 1 - Zeile 7 * <br> * Spalte 1, Zeile 46 - Zeile 55 * <br> * Beispiel 3 * <br> * Abbildung 5 * <br> * Abbildung 6 * <br> --- | 1-6,8-21 | C01B3/38 B01J8/04 |
| Y | WO 88 01983 A (STEINMUELLER GMBH L & C) 24. März 1988 (1988-03-24) <br> * Seite 2, Zeile 1 - Zeile 15 * <br> * Seite 10, Zeile 1 - Zeile 30 * <br> * Abbildung 1 * <br> * Anspruch 1 * <br> --- | 1-6,8-21 | |
| A | EP 0 435 642 A (TOKYO ELECTRIC POWER CO ;KOBE STEEL LTD (JP)) 3. Juli 1991 (1991-07-03) <br> * Spalte 3, Zeile 36 - Spalte 5, Zeile 33 * <br> * Abbildungen 1,2 * <br> --- <br> -/-- | 1-4,9-11 | |

RECHERCHIERTE SACHGEBIETE (Int.Cl.7)

C01B
B01J

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| MÜNCHEN | 24. Juni 2003 | Harf-Bapin, E |

**EP 1 342 694 A1**

**Europäisches Patentamt**

**UNVOLLSTÄNDIGE RECHERCHE ERGÄNZUNGSBLATT C**

**Nummer der Anmeldung**

**EP 03 09 0050**

Unvollständig recherchierte Ansprüche:
    1-21

Grund für die Beschränkung der Recherche:

Anhand der Angaben des Anspruchs 1 sowie der Beschreibung wäre der Fachmann nicht in der Lage, eine funktionierende Vorrichtung zur Reformierung von Kohlenwasserstoffen aus einem Einsatzgas auszuführen: es fehlen wesentliche technische Merkmale wie zum Beispiel Angaben zur Zuführung des Einsatzgases und zur Ausführung der Produktgase. Die geltenden Patentansprüche 1-21 beziehen sich auf eine unverhältnismäßig große Zahl möglicher Vorrichtungen, von denen sich nur ein kleiner Anteil im Sinne von Art. 84 EPÜ auf die Beschreibung stützen. Im vorliegenden Fall fehlt den Patentansprüchen die entsprechende Stütze in einem solchen Maße, daß eine sinnvolle Recherche über den gesamten erstrebten Schutzbereich unmöglich erscheint. Daher wurde die Recherche auf die Teile der Patentansprüche gerichtet, welche im o.a. Sinne als gestützt erscheinen, nämlich die Teile betreffend die Vorrichtung wie sie im Ausführungsbeispiel angegeben ist, einschliesslich offensichtlich äquivalenter Vorrichtungen.

# EP 1 342 694 A1

Europäisches
Patentamt

**EUROPÄISCHER
TEILRECHERCHENBERICHT**

Nummer der Anmeldung

EP 03 09 0050

## EINSCHLÄGIGE DOKUMENTE

| Kategorie | Kennzeichnung des Dokuments mit Angabe, soweit erforderlich der maßgeblichen Teile | Betrifft Anspruch |
|---|---|---|
| D,A | WO 98 52868 A (SCHULER ALEXANDER ;VOGEL BERNHARD (DE); FRAUNHOFER GES FORSCHUNG ()  26. November 1998 (1998-11-26)  * Seite 13, Zeile 23 - Seite 15, Zeile 11 *  * Abbildung 1 *  ----- | 1 |

**KLASSIFIKATION DER ANMELDUNG** (Int.Cl.7)

**RECHERCHIERTE SACHGEBIETE** (Int.Cl.7)

EPO FORM 1503 03.82 (P04C12)

12

## ANHANG ZUM EUROPÄISCHEN RECHERCHENBERICHT
## ÜBER DIE EUROPÄISCHE PATENTANMELDUNG NR.

EP 03 09 0050

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0360505 | A | 28-03-1990 | JP | 1964213 C | 25-08-1995 |
| | | | JP | 2083028 A | 23-03-1990 |
| | | | JP | 6088761 B | 09-11-1994 |
| | | | JP | 2141403 A | 30-05-1990 |
| | | | JP | 2517658 B2 | 24-07-1996 |
| | | | DE | 68913249 D1 | 31-03-1994 |
| | | | DE | 68913249 T2 | 30-06-1994 |
| | | | EP | 0360505 A2 | 28-03-1990 |
| | | | US | 5164163 A | 17-11-1992 |
| WO 8801983 | A | 24-03-1988 | DE | 3631365 A1 | 24-03-1988 |
| | | | DE | 3631366 A1 | 17-03-1988 |
| | | | AT | 106852 T | 15-06-1994 |
| | | | DE | 3750032 D1 | 14-07-1994 |
| | | | WO | 8801983 A2 | 24-03-1988 |
| | | | EP | 0281600 A1 | 14-09-1988 |
| | | | JP | 1501224 T | 27-04-1989 |
| | | | NO | 882049 A | 01-07-1988 |
| EP 0435642 | A | 03-07-1991 | JP | 3232703 A | 16-10-1991 |
| | | | DE | 69004943 D1 | 13-01-1994 |
| | | | DE | 69004943 T2 | 05-05-1994 |
| | | | EP | 0435642 A2 | 03-07-1991 |
| | | | US | 5226928 A | 13-07-1993 |
| WO 9852868 | A | 26-11-1998 | DE | 19721630 C1 | 11-02-1999 |
| | | | WO | 9852868 A1 | 26-11-1998 |
| | | | EP | 0991586 A1 | 12-04-2000 |

EPO FORM P0461

Für nähere Einzelheiten zu diesem Anhang : siehe Amtsblatt des Europäischen Patentamts, Nr.12/82